# EUROPÄISCHE PATENTSCHRIFT

(11) **EP 3 013 547 B1**
(45) Veröffentlichungstag und Bekanntmachung des Hinweises auf die Patenterteilung: **07.03.2018**
(21) Anmeldenummer: 14734395.8
(22) Anmeldetag: 27.06.2014
(51) Int. Cl.: B29C 35/02, B29C 49/68, B29C 49/64, B29B 13/02, B29C 35/08, B29C 49/06

(54) **VORRICHTUNG ZUM ERWÄRMEN VON VORFORMLINGEN AUS THERMOPLASTISCHEM KUNSTSTOFF**
DEVICE FOR HEATING PREFORMS CONSISTING OF THERMOPLASTIC MATERIAL
DISPOSITIF PERMETTANT DE CHAUFFER DES ÉBAUCHES EN MATÉRIAU THERMOPLASTIQUE

(30) Priorität: 27.06.2013 DE 102013010693
(43) Veröffentlichungstag der Anmeldung: 04.05.2016
(73) Patentinhaber: KHS Corpoplast GmbH, 22145 Hamburg (DE)
(72) Erfinder: LEWIN, Frank, 22889 Tangstedt (DE); LINKE, Michael, 22159 Hamburg (DE); ULUTÜRK, Deniz, 22765 Hamburg (DE)
(74) Vertreter: Hausfeld, Norbert
(86) Internationale Anmeldenummer: PCT/EP2014/001759
(87) Internationale Veröffentlichungsnummer: WO 2014/206569

(56) Entgegenhaltungen:
- EP-A2- 2 444 234
- CN-A- 105 307 829
- DE-A1-102009 047 540
- DE-U1-202004 010 454

## Beschreibung

Die Erfindung bezieht sich auf eine Vorrichtung zum Erwärmen von Vorformlingen aus thermoplastischem Kunststoff gemäß Oberbegriff des Anspruches 1.

Gattungsgemäße Vorrichtungen sind in der Regel in Streckblasmaschinen vorgesehen. Sie dienen zur Erwärmung der z.B. aus Polyethylenterephthalat (PET) bestehenden Kunststoffvorformlinge, aus denen dann nach Erwärmung mittels Blasformung die gewünschten Kunststoffbehälter hergestellt werden.

In der Regel weisen gattungsgemäße Vorrichtungen eine umlaufende Fördereinrichtung auf, der die Vorformlinge über einen Einlaufstern zugeführt werden. Mit der Fördereinrichtung werden die Vorformlinge dann zur thermischen Konditionierung über einen definierten Abschnitt des Transportweges durch einen Heizkanal geführt. Dabei werden die Vorformlinge, bzw. ihr in den Heizkanal eintauchender Bereich auf Temperaturen oberhalb des Glaspunktes des zu verarbeitenden Materials erwärmt.

Selbstverständlich sind auch andere Vorrichtungen bekannt, z.B. solche in denen eine stehende Beheizung stattfindet.

In gattungsgemäßen Vorrichtungen kann der Heizkanal z.B. durch mindestens ein Heizmodul, bei bewegter Beheizung in der Regel durch mehrere in Transportrichtung miteinander verbundene Heizmodule gebildet werden, die jeweils einen Abschnitt des Heizkanals ausbilden. Entsprechende Heizmodule sind z.B. in der DE 10 2009 033 902 beschrieben.

Bekannte Heizmodule werden durch Heizkanalabschnitte mit einem im Wesentlichen geschlossenen Strahlungsraum ausgebildet. Auf einer Seite des Heizkanals sind Heizelemente vorgesehen, in der Regel horizontal verlaufende Heizstrahler, die Infrarotstrahlung mit einem Strahlungsmaximum im Bereich zwischen 800 und 1500 nm abgeben. Ein auf dieser Seite hinter den Heizelementen vorgesehener Reflektor (Hauptreflektor) sorgt dafür, dass von den Heizelementen ausgehende nach hinten gerichtete Strahlung in den Heizkanal reflektiert wird. Auf der Gegenseite und im Boden des Strahlungsraumes sind Reflektorelemente (Gegenreflektor und Bodenreflektor) vorgesehen, die einen möglichst geringen Wärmeverlust in dem Heizkanalabschnitt gewährleisten sollen. Bei dem Gegenreflektor und dem Bodenreflektor handelt es sich beispielsweise um an der Wand bzw. dem Boden angeordnete polierte und/oder beschichtete Metallelemente, die im Hinblick auf die in bekannten Vorrichtungen im Betrieb auftretenden Vibrationen etc. eine entsprechend hohe mechanische Festigkeit aufweisen.
Problematisch ist jedoch, dass derartige Metallspiegel nicht optimale Reflektionseigenschaften aufweisen, was insbesondere zu Energieverlusten und einer nicht erwünschten Aufheizung der Elemente führen kann. Außerdem führen Verschmutzungen und entsprechende Reinigungsvorgänge zu einer weiteren Verschlechterung der Reflektionseigenschaften durch Kratzer etc.
Alternativ sind für den Gegen- und Bodenreflektoren Keramikelemente bekannt, die die notwendige Festigkeit aufweisen, um den mechanischen Beanspruchungen gerecht zu werden. Derartige Keramikmaterialien weisen aber einen vergleichsweise geringen Reflektionskoeffizienten auf.
Darüber hinaus sind keramische Materialien bekannt, die hauptsächlich aus amorphem Siliziumoxiden bestehen und eine sehr gute diffuse Reflektivität bzw. einen vergleichsweise hohen Reflektionskoeffizienten aufweisen. Derartige Materialien haben jedoch den Nachteil, dass sie nur eine vergleichsweise geringe mechanische Festigkeit aufweisen und bei Montage oder im Betrieb leicht Schaden nehmen.

EP 2 444 234 A2 offenbart eine Vorrichtung gemäß dem Oberbegriff des Anspruchs 1. Aufgabe der Erfindung ist es daher, eine Vorrichtung zu schaffen, bei der Gegen- und/oder Bodenreflektor gegenüber dem Stand der Technik sowohl gute Reflektionseigenschaften als auch eine ausreichende mechanische Festigkeit aufweisen.
Gelöst wird diese Aufgabe mit einer Vorrichtung, die die kennzeichnenden Merkmale des Anspruches 1 aufweist.

Demnach ist vorgesehen, dass die in der erfindungsgemäßen Vorrichtung als Gegen- und oder Bodenreflektor vorgesehenen Reflektorelemente aus zwei unterschiedlichen Schichten aufgebaut sind.

Eine Reflektionsschicht dient dabei primär der Reflektion, während eine daran angrenzende Trägerschicht als Träger für die Reflektionsschicht dient.

Der Begriff Schicht soll, soweit er in dieser Anmeldung verwendet wird, insbesondere in Form von flächigen Formteilen ausgebildete Elemente einschließen, die nach entsprechender Konfektionierung aufeinander angeordnet werden und dann Reflektionsschicht bzw. die Trägerschicht ausbilden. Er umfasst aber auch eine Reflektionsschicht, die z.B. durch Aufspritzen oder Tauchen auf der Trägerschicht aufgebracht wird.

Erfindungsgemäß ist weiterhin vorgesehen, dass die Reflektionsschicht aus einem reflektierenden Siliziumdioxidmaterial gebildet ist, wobei bei einem bevorzugt eingesetzten Material der Siliziumdioxidanteil größer 95%, in einer besonders bevorzugten Ausgestaltung über 99% ist.

Ein geeignetes Material für die Reflektonsschicht wird z.B. von den Firmen Heraeus oder Saint-Gobain vertrieben. Es handelt sich um ein Material, das aus zu über 99% reinen amorphen Siliziumdioxidfasern besteht und einen IR-Reflektionswert von >90% im Bereich von 500 - 2500 nm aufweist. Im Vergleich dazu haben Materialien wie metallisches Aluminium oder Aluminiumsilicat oder Calciumsilicat mit Werten zwischen 70% und 85 % deutlich schlechtere IR-Reflektionseigenschaften.

Ein im Rahmen der Erfindung bevorzugt als Reflektionsschicht eingesetztes Element besteht aus dem oben erwähnten Material, d.h. nahezu ausschließlich aus amorphen Siliziumdioxidfasern.

Problematisch an den erwähnten erfindungsgemäß für die Reflektionsschicht einsetzbaren Materialien ist, dass sie nur eine geringe mechanische Stabilität aufweisen. Untersuchungen der Anmelderin haben gezeigt, dass ein Reflektorelement aus dem erwähnten Material mit einem hohen Anteil an amorphen Siliziumdioxidfasern bei direktem Kontakt mit den Wänden des Heizmoduls im Betrieb aufgrund der auftretenden Vibrationen zerrieben wird.

Dieser Effekt lässt sich vermeiden, wenn wie erfindungsgemäß vorgesehen, die Reflektionsschicht auf einer weiteren, als Träger dienenden, Trägerschicht angeordnet ist.

Dabei kontaktiert beispielsweise die Trägerschicht ihrerseits die Wände des Heizmoduls oder verleiht der Reflektionsschicht derartige Stabilität, dass das die Trägerschicht und die Reflektionsschicht umfassende Reflektorelement im Wesentlichen frei stehend angeordnet werden kann.

Die Trägerschicht kann aus unterschiedlichen Materialien bestehen. Wesentlich ist, dass die Trägerschicht eine ausreichende mechanische Stabilität aufweist und weiterhin ähnliche thermische Eigenschaften wie die Reflektionsschicht besitzt. Entsprechende Eigenschaften hat insbesondere eine Schicht aus Quarzglas. Geeignet sind weiterhin auch z.B. Schichten auf Basis von Aluminiumsilikat oder Calciumsilikat. Bekannte geeignete Materialien bzw. Formteile sind z.B. unter der Marke Altraform KVS-Formteile im Markt erhältlich. Es handelt sich dabei um Keramiken auf Basis polykristalliner Wolle, die einen Al₂O₃-Gehalt von 28-88% und einen SiO₂-Gehalt von 12-20% aufweisen. Die Rohdichten liegen zwischen 300 und 700 kg/m³. Weitere Produkte sind z.B. unter der Bezeichnung Altraform KVR erhältlich. Hier liegen die Al₂O₃-Anteile bei 98% und der SiO₂-Gehalt bei 2%. Die Rohdichten liegen zwischen 240 und 500 kg/m³.

Bei der Trägerschicht kann es sich insbesondere um ein bereits in bekannten Vorrichtungen als Reflektor eingesetztes Element handeln. Wesentlich für die Wahl der Trägerschicht ist weiterhin, dass sie aus einem Material besteht, das einen ähnlich geringen Wärmeausdehnungskoeffizienten aufweist wie die Reflektionsschicht, um thermisch bedingte Spannungen zu vermeiden.

Erfindungsgemäß ist weiterhin vorgesehen, dass beide Schichten des Reflektorelements dauerhaft miteinander verbunden sind. Die Verbindung kann z.B. mittels Laminierung erfolgen, d.h. die Reflektionsschicht kann auf die Trägerschicht auflaminiert werden. Alternativ ist es auch möglich beide Schichten zu verkleben. Ein hierfür geeigneter Klebstoff ist z.B. unter der Marke *Fiberfax* im Markt erhältlich.

Weiterhin denkbar ist auch, dass die Reflektionsschicht im Nassverfahren, insbesondere durch Aufspritzen oder Tauchen, auf die Trägerschicht aufgebracht und anschließend getrocknet und somit dauerhaft mit der Trägerschicht verbunden wird. Auch die hierfür erforderlichen flüssigen Zubereitungen sind im Markt erhältlich.

In der Regel reicht es aus, wenn die Reflektionsschicht eine geringere Dicke aufweist als die Trägerschicht. Bevorzugt ist die Reflektionsschicht maximal halb so dick wie die Trägerschicht.

Es hat sich gezeigt, dass die Trägerschicht in der Lage ist, die darauf angeordnete Reflektionsschicht so zu stabilisieren, dass die in der Vorrichtung auftretenden Vibrationen diese nicht mehr angreifen.

Im Folgenden soll die Erfindung anhand zweier Figuren näher erläutert werden. Es zeigen:
- Fig. 1: ein Heizmodul gemäß einer ersten Ausführungsform der Erfindung und
- Fig. 2: ein Heizmodul gemäß einer weiteren Ausführungsform der Erfindung.

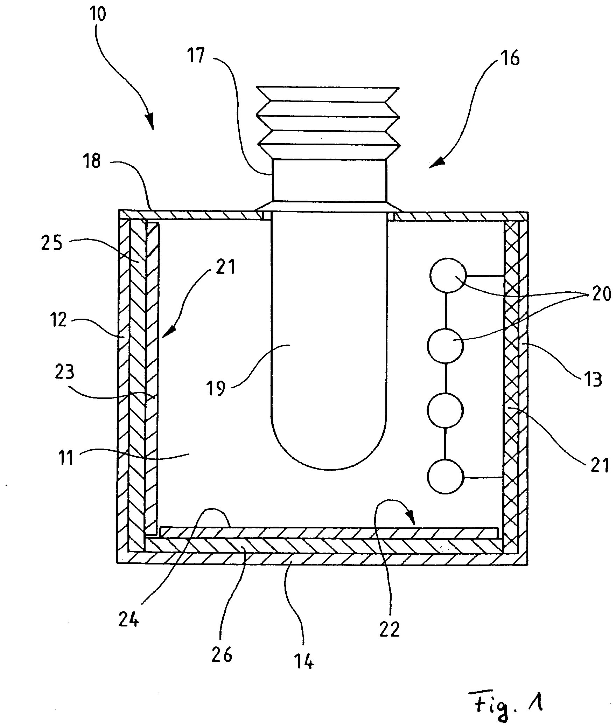

Figur 1 zeigt einen Schnitt durch ein Heizmodul 10, in dem ein Heizkanal 11 mit U-förmigem, durch Seitenwände 12, 13 und Bodenwand 14 begrenztem Profil ausgebildet ist.

In das Heizmodul 10 eingesetzt dargestellt ist ein Vorformling 16, der im Bereich seines Halses 17 auf einer oberen Abdeckung 18 des Heizmoduls gehalten ist und dessen unterer zu verformender Bereich 19 in den Heizkanal 11 hineinragt.

Im Bereich der Seitenwand 13 sind Heizelemente 20 vorgesehen. Bei den Heizelementen 20 handelt es sich um horizontal verlaufende Heizröhren, die bevorzugt Strahlung im nahen Infrarotbereich abgeben. An der Seitenwand 13 ist weiterhin ein als Hauptreflektor bezeichnetes Reflektorelement 21 angeordnet, das z.B. aus Aluminiumdioxid bestehen kann.

Im Bereich der Bodenwand 14 und der Seitenwand 12 sind als Gegen- bzw. Bodenreflektor dienende Reflektorelemente 21, bzw. 22 angeordnet.

Die Reflektorelemente 21, 22 sind aus zwei aus unterschiedlichem Material bestehenden Schichten 23, 24; 25, 26 aufgebaut, die mittels Verklebung oder Laminierung miteinander verbunden sein können.

Die eine Schicht ist jeweils eine dem Heizkanal 11 zugewandte äußere Reflektionsschicht 23, 24, die aus einem hoch-reflektierenden Material auf Basis von Siliziumdioxid besteht, das jedoch eine relativ geringe mechanische Stabilität aufweist.

Um ihre Stabilität zu erhöhen ist die Reflektionsschicht auf einer Trägerschicht 25, 26 aufgebracht, die insbesondere eine Trägerfunktion für die Reflektionsschicht 23, 24 erfüllt. Bei der Trägerschicht handelt es bevorzugt um Quarzglas, denkbar sind aber auch Keramikschichten.

Die Trägerschicht ist ihrerseits an der Seitenwand 12, bzw. der Bodenwand 14 z.B. durch nicht gezeigte Klammern oder anderen Halteelemente, befestigt. Damit ist kein direkter Kontakt der Reflektionsschicht 23, 24 mit den Wänden 12, 14 des Heizmoduls gegeben, und die im Betrieb auftretenden Vibrationen führen zu keiner das Material zersetzenden Reibung.

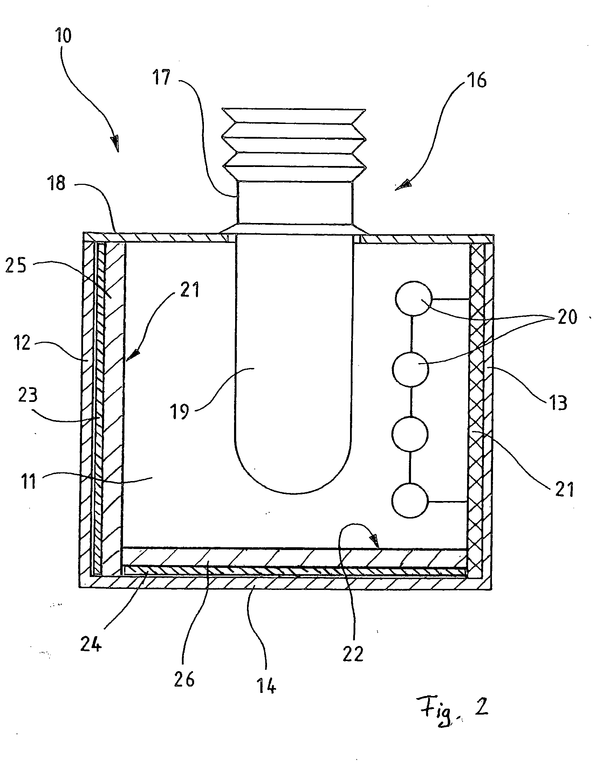

Fig. 2 zeigt ein weiteres Ausführungsbeispiel der Erfindung mit einem Heizkanal 11 entsprechend dem bereits beschriebenen schematischen Aufbau. Der Unterschied zu dem in Fig. 1 dargestellten Ausführungsbeispiel besteht im Wesentlichen aus der Beschaffenheit der als Gegen- bzw. Bodenreflektor dienenden Reflektorelemente 21 und 22.

Die Reflektorelemente 21 und 22 umfassen jeweils eine als Trägerschicht dienende Quarzglasplatte 25, 26, die mit einer siliziumdioxidhaltigen Reflektionsschicht 23, 24 beschichtet ist. Die Reflektionsschichten 23, 24 sind dabei beispielsweise im Nassverfahren auf die Quarzglasplatten 25, 26 aufgebracht und sind somit ohne Trägerschicht überhaupt nicht herstellbar. Selbstverständlich lassen sich entsprechende Reflektorelemente aus beschichteten Trägerschichten auch mit anderen Trägerschichtmaterialien als Quarzglas realisieren.

Die Reflektorelemente 21, 22 sind beispielsweise derart angeordnet, dass die Reflektionsschichten 23, 24 dem Innenraum des Heizkanals 11, d.h. den zu erwärmenden Vorformlingen 19, zugewandt sind. Diese Anordnung ist auch geeignet für im Infrarotbereich undurchlässige Trägerschichtmaterialien.

Besonders vorteilhaft ist jedoch die in Fig. 2 dargestellte Anordnung, bei der die Quarzglasplatten 25, 26 der Reflektorelemente 21, 22 dem Innenraum des Heizkanals zugewandt sind und dadurch die Reflektionsschichten 23, 24 vor Verschmutzungen und Beschädigungen schützen. Allerdings wird dadurch ein geringfügig höherer Strahlungsverlust durch Absorption in dem Material der Quarzglasscheiben in Kauf genommen, das nun vom Heizkanal 11 aus gesehen vor der reflektierenden Reflektionsschicht angeordnet ist. Entsprechend ist diese Anordnung der Reflektorelemente 21, 22 nur geeignet für Trägerschichtmaterialien, die einen möglichst geringen Absorptionskoeffizienten für Infrarotstrahlung aufweisen.

## Patentansprüche

1. Vorrichtung zum Erwärmen von Vorformlingen (16) aus thermoplastischem Kunststoff, mit einem aus mindestens einem Heizmodul (10) gebildeten Heizkanal (11), durch den die zu erwärmenden Bereiche (19) der Vorformlinge (16) mittels einer Fördervorrichtung nacheinander hindurchgeführt werden, wobei an einer Seitenwand (13) der Heizkanals Heizeinrichtungen (20) angeordnet sind, die Infrarotstrahlung abgeben und im Bereich einer den Heizstrahlern gegenüberliegenden Seite (12) und/oder des Bodens (14) des Heizkanals (11) als Gegen- bzw. Bodenreflektor dienende Reflektorelemente (21, 22) angeordnet sind, die einen möglichst geringen Wärmeverlust in dem Heizkanalabschnitt gewährleisten sollen, **dadurch gekennzeichnet, dass** das zur Bildung des Gegen- und/ oder Bodenreflektor dienende Reflektorelement (21, 22) aus zwei Schichten mit einer Reflektionsschicht (23, 24) und einer Trägerschicht (25, 26) aufgebaut ist, wobei die Reflektionsschicht (23, 24) ein Material auf Siliziumdioxidbasis mit einem IR-Reflektionswert von größer als 90% im Bereich von 500 bis 2500nm umfasst, wobei die Trägerschicht (25, 26) aus einem Material mit höherer mechanischer Festigkeit als die Reflektionsschicht (23, 24) besteht und als Träger für die Reflektionsschicht (23, 24) dient und wobei beide Schichten einen ähnlichen Wärmeausdehnungskoeffizienten aufweisen und dauerhaft miteinander verbunden sind.

2. Vorrichtung nach Anspruch 1, **dadurch gekennzeichnet, dass** die Reflektionsschicht (23, 24) einen Siliziumdioxid-Anteil von mehr als 95%, bevorzugt mehr als 99% aufweist.

3. Vorrichtung nach Anspruch 2, **dadurch gekennzeichnet, dass** die Reflektionsschicht (23, 24) ein aus amorphen Siliziumdioxidfasern hergestelltes flächiges Formteil ist.

4. Vorrichtung nach Anspruch 1, **dadurch gekennzeichnet, dass** die Trägerschicht (25, 26) ein Quarzglas, Aluminiumsilicat oder Calciumsilikat enthaltendes flächiges Formteil ist.

5. Vorrichtung nach einem der vorgehenden Ansprüche, **dadurch gekennzeichnet, dass** die Reflektionsschicht (23, 24) auf der Trägerschicht (25, 26) im Nassverfahren, insbesondere mittels Aufspritzen oder Tauchen, aufgebracht ist.

6. Vorrichtung nach einem der Ansprüche 1 bis 4, **dadurch gekennzeichnet, dass** beide Schichten (24, 26; 23; 25) mittels Verklebung oder Laminierung miteinander verbunden sind.

7. Vorrichtung nach einem der vorgehenden Ansprüche, **dadurch gekennzeichnet, dass** die Reflektionsschicht (23, 24) eine Dicke aufweist, die maximal 50% der Dicke der Trägerschicht (25, 26) aufweist.

8. Vorrichtung nach einem der vorgehenden Ansprüchen, **dadurch gekennzeichnet, dass** wenigstens eines der Reflektorelemente (21, 22) derart angeordnet ist, dass die Trägerschicht (25, 26) des Reflektorelements (21, 22) dem Heizkanal (11) zugewandt ist.

## Claims

1. Device for the heating of preforms (16) made of thermoplastic resin comprising a heating channel (11) that is formed from at least one heating module (10) and through which the regions (19) to be heated of the preforms (16) are guided in succession by means of a conveying device, whereby heating facilities (20) emitting infrared radiation are arranged on a side wall (13) of the heating channel and reflector elements (21, 22) serving as counter- and/or floor reflector are arranged in the region of a side (12) that is opposite from the radiators and/or in the region of the floor (14) of the heating channel (11) and are to provide for the lowest possible heat loss in the heat channel section, **characterised in that** the reflector element (21, 22) serving for formation of the counter- and/or floor reflector is made of two layers including a reflection layer (23, 24) and a carrier layer (25, 26), whereby the reflection layer (23, 24) comprises a material based on silicon dioxide having an IR reflection value of more than 90% in the range from 500 to 2500 nm, whereby the carrier layer (25, 26) consists of a material with higher mechanical strength than the reflection layer (23, 24) and serves as carrier for the reflection layer (23, 24), and whereby both layers comprise a similar heat expansion coefficient and are permanently connected to each other.

2. Device according to claim 1, **characterised in that** the reflection layer (23, 24) comprises a silicon dioxide fraction of more than 95%, preferably of more than 99%.

3. Device according to claim 2, **characterised in that** the reflection layer (23, 24) is a two-dimensional form part produced from amorphous silicon dioxide fibres.

4. Device according to claim 1, **characterised in that** the carrier layer (25, 26) is a two-dimensional form part containing quartz glass, aluminium silicate or calcium silicate.

5. Device according to any one of the preceding claims, **characterised in that** the reflection layer (23, 24) is applied onto the carrier layer (25, 26) through a wet process, in particular by means of spraying or immersion.

6. Device according to any one of the claims 1 to 4, **characterised in that** both layers (24, 26; 23; 25) are connected to each other by means of gluing or lamination.

7. Device according to any one of the preceding claims **characterised in that** the reflection layer (23, 24) has a thickness that is maximally 50% of the thickness of the carrier layer (25, 26).

8. Device according to any one of the preceding claims, **characterised in that** at least one of the reflector elements (21, 22) is arranged appropriately such that the carrier layer (25, 26) of the reflector element (21, 22) faces the heating channel (11).

## Revendications

1. Dispositif permettant de chauffer des préformes (16) en matière thermoplastique, avec un canal de chauffage (11) formé par au moins un module de chauffage (10) que les zones (19) à chauffer des préformes (16) traversent successivement au moyen d'un dispositif de transport, des dispositifs de chauffage (20) émettant un rayonnement infrarouge étant agencés à une paroi latérale (13) du canal de chauffage et des éléments réflecteurs (21, 22) servant de contre-réflecteur ou de réflecteur de fond destinés à minimiser autant que possible les pertes de chaleur dans cette section du canal de chauffage étant agencés au niveau d'une paroi (12) opposée aux radiateurs de chauffage et/ou du fond (14) du canal de chauffage (11), **caractérisé en ce que** l'élément réflecteur (21, 22) formant le contre-réflecteur et/ou le réflecteur de fond est constitué de deux couches avec une couche de réflexion (23, 24) et une couche de support (25, 26), la couche de réflexion (23, 24) comprenant un matériau à base de dioxyde de silicium avec un indice de réflexion infrarouge supérieur à 90 % dans le domaine de 500 à 2500 nm et la couche de support (25, 26) étant en un matériau d'une résistance mécanique supérieure à celle de la couche de réflexion (23, 24) et faisant office de support pour la couche de réflexion (23, 24), les deux couches ayant un coefficient de dilatation thermique similaire et étant durablement jointes l'une à l'autre.

2. Dispositif selon la revendication 1, **caractérisé en ce que** la part de dioxyde de silicium dans la couche de réflexion (23, 24) est supérieure 95 % et, de préférence, supérieure à 99 %.

3. Dispositif selon la revendication 2, **caractérisé en ce que** la couche de réflexion (23, 24) est une pièce moulée plane en fibres de dioxyde de silicium amorphes.

4. Dispositif selon la revendication 1, **caractérisé en ce que** la couche de support (25, 26) est une pièce moulée plane contenant du verre de quartz, du silicate d'aluminium ou du silicate de calcium.

5. Dispositif selon l'une des revendications précédentes, **caractérisé en ce que** la couche de réflexion (23, 24) est appliquée sur la couche de support (25, 26) par procédé humide, notamment par projection ou par immersion.

6. Dispositif selon l'une des revendications 1 à 4, **caractérisé en ce que** les deux couches (24, 26; 23; 25) sont jointes l'une contre l'autre par collage ou stratification.

7. Dispositif selon l'une des revendications précédentes, **caractérisé en ce que** la couche de réflexion (23, 24) a une épaisseur maximale de 50 % de l'épaisseur de la couche de support (25, 26).

8. Dispositif selon l'une des revendications précédentes, **caractérisé en ce que** l'un au moins des éléments réflecteurs (21, 22) est agencé de façon telle que la couche de support (25, 26) de l'élément réflecteur (21, 22) fasse face au canal de chauffage (11).
